# EUROPÄISCHE PATENTSCHRIFT

(11) **EP 4 348 010 B1**
(45) Veröffentlichungstag und Bekanntmachung des Hinweises auf die Patenterteilung: **25.03.2026**
(21) Anmeldenummer: 22768793.6
(22) Anmeldetag: 24.08.2022
(51) Int. Cl.: F01D 11/00, F16J 15/44, F01D 11/10, F01D 5/30, F16J 15/08

(54) **ROTOR MIT DICHTRING UND STRÖMUNGSMASCHINE MIT DEM ROTOR**
ROTOR WITH SEALING RING AND TURBOMACHINE WITH ROTOR
BAGUE D'ÉTANCHÉITÉ D'UN ROTOR ET TURBOMACHINE COMPRENANT LE ROTOR

(30) Priorität: 24.08.2021 EP 21192696
(43) Veröffentlichungstag der Anmeldung: 10.04.2024
(73) Patentinhaber: Siemens Energy Global GmbH & Co. KG, 81739 München (DE)
(72) Erfinder: SCHRÖDER, Peter, 45327 Essen (DE); SPRINGBORN, Dirk, 12203 Berlin (DE); KOLK, Karsten, 45481 Mülheim a.d. Ruhr (DE)
(86) Internationale Anmeldenummer: PCT/EP2022/073534
(87) Internationale Veröffentlichungsnummer: WO 2023/025827

(56) Entgegenhaltungen:
- EP-A1- 1 947 373
- DE-A1- 102010 063 594
- DE-A1- 102018 218 942
- FR-A1- 2 985 763
- US-A1- 2008 260 521
- US-A1- 2012 034 087
- US-B2- 9 303 767

## Beschreibung

In einer Strömungsmaschine, wie beispielsweise einer Gasturbine oder einer Dampfturbine, wird herkömmlich Kühlluft eingeblasen, um thermisch stark beanspruchte Komponenten der Strömungsmaschine zu kühlen. Bei den stark beanspruchten Komponenten kann es sich beispielsweise um eine Brennkammer, um Laufschaufeln und/oder um Leitschaufeln, insbesondere die Lauschaufeln und/oder Leitschaufeln in der ersten Stufe stromab der Brennkammer, handeln. Zudem wird herkömmlich Sperrluft in die Strömungsmaschine eingeblasen, um damit Leckagen in einem Strömungskanal der Strömungsmaschine abzudichten. Die Leckagen können beispielsweise zwischen den Laufschaufeln und einem Gehäuse der Strömungsmaschine und/oder zwischen den Leitschaufeln und einem Rotor der Strömungsmaschine entstehen.

Daneben können Leckagen auch in einem luftgekühlten Rotor einer Gasturbine auftreten. So ist beispielsweise aus der DE 10 2018 218 942 A1 ein gattungsgemäßer Rotor mit einer Abdichtung des Spalts zwischen Plattform und Abdeckelement bekannt, bei der ein T-förmiger Dichtungsring den besagten Spalt abdichtet.

Ungewünschte Leckagen der Kühlluft und/oder der Sperrluft führen zu einer Verringerung in dem Wirkungsgrad der Strömungsmaschine. Zum Abdichten der Leckagen können beispielsweise segmentierte Dichtungsringe verwendet werden, die mehrere Segmente aufweisen, die gegeneinander verlagern können. Dadurch können die segmentierten Dichtungsringe sich an ändernde Querschnitte der Strömungsmaschine anpassen, die durch ein Erwärmen und/oder ein Abkühlen der Strömungsmaschine verursacht werden. Problematisch dabei ist, dass in dem Bereich, an den zwei Segmente aneinander anstoßen, sich Leckagen bilden können, die wiederum zu einer Verringerung des Wirkungsgrads der Strömungsmaschine führen können. So ist aus der EP 1 944 471 A1 bekannt, dass das Abdeckelement kein einstückiges, ringförmiges Element sein muss, sondern aus einer Vielzahl von plattförmigen Dichtelemente gebildet sein kann, die einzeln an einer Turbinenscheibe einhängbar sind.

Des Weiteren ist aus der US 2012/034087 A1 bekannt, zur Abdichtung in der nach außen weisenden Kante eines jeden plattenförmigen Elements einen einzelnen Dichtstreifen einzusetzen.

Aufgabe der Erfindung ist es daher, einen Rotor und eine Strömungsmaschine mit dem Rotor zu schaffen, wobei mit dem Dichtungsring eine Strömungsmaschine mit einem hohen Wirkungsgrad erzielt werden kann.

Der erfindungsgemäße Rotor für eine Strömungsmaschine umfasst eine Rotorscheibe, die umfangsseitig eine Vielzahl von in einem Kranz angeordneten Laufschaufeln aufweist, wobei die Laufschaufeln eine Schaufelplattform mit einem Plattformüberstand umfassen, deren Unterseite einer Stirnseite der Rotorscheibe zugewandt ist, wobei stirnseitig der Rotorscheibe radial und innerhalb der Unterseite ein Abdeckring mit einer sich radial auswärts öffnenden, in Umfangsrichtung erstreckende Aufnahmenut angeordnet ist, in welcher ein Dichtungsring zur Dichtung eines Radialspalts zwischen Unterseite und Abdeckring angeordnet ist, wobei der Dichtungsring mindestens ein erstes Segment und ein zweites Segment umfasst, die jeweils ein erstes Längsende bezüglich einer Umfangsrichtung des Dichtungsrings und ein zweites Längsende bezüglich der Umfangsrichtung aufweisen, wobei das erste Segment in einem Bereich des ersten Längsendes eine erste Aussparung und einen ersten Vorsprung mit einer die erste Aussparung in der Umfangsrichtung begrenzenden ersten Flanke des ersten Vorsprungs aufweist und das zweite Segment in einem Bereich des zweiten Längsendes eine zweite Aussparung und einen zweiten Vorsprung mit einer die zweite Aussparung in der Umfangsrichtung begrenzenden ersten Flanke des zweiten Vorsprungs aufweist, wobei das erste Segment und das zweite Segment einen Kopplungszustand aufweisen, in dem das erste Segment und das zweite Segment in der Umfangsrichtung relativ zueinander verlagerbar sind sowie der erste Vorsprung in der zweiten Aussparung angeordnet ist, der zweite Vorsprung in der ersten Aussparung angeordnet ist sowie die erste Flanke des ersten Vorsprungs und die erste Flanke des zweiten Vorsprungs eingerichtet sind, bei einem ersten Verlagern des ersten Segments weg von dem zweiten Segment aneinander anzustoßen und somit das erste Verlagern zu begrenzen.

Eine Leckageströmung, die in einer Axialrichtung bezüglich des Dichtungsrings den Dichtungsring passiert, muss in der Umfangsrichtung strömen und dabei sowohl den ersten Vorsprung als auch den zweiten Vorsprung umströmen. Dadurch erfährt die Leckageströmung einen hohen Strömungswiderstand, wodurch der Massenstrom der Leckageströmung niedrig ist. Damit kann ein hoher Wirkungsgrad der Strömungsmaschine erreicht werden.

Es ist bevorzugt, dass die erste Aussparung in der Umfangsrichtung länger als der zweite Vorsprung in der Umfangsrichtung ist und die zweite Aussparung in der Umfangsrichtung länger als der erste Vorsprung in der Umfangsrichtung ist. Dadurch kann vorteilhaft erreicht werden, dass das erste Segment und das zweite Segment in der Umfangsrichtung relativ zueinander verlagerbar sind.

Es ist bevorzugt, dass die erste Aussparung eine Stirnfläche der ersten Aussparung aufweist und der zweite Vorsprung eine Stirnfläche des zweiten Vorsprungs aufweist, wobei die Stirnfläche der ersten Aussparung diese in einer Axialrichtung bezüglich des Dichtungsrings begrenzt, die Stirnfläche des zweiten Vorsprungs diesen in der Axialrichtung begrenzt, wobei in dem Kopplungszustand die Stirnfläche der ersten Aussparung und die Stirnfläche des zweiten Vorsprungs einander zugewandt angeordnet sind und einen ersten Dichtspalt begrenzen. Es ist zudem bevorzugt, dass die zweite Aussparung eine Stirnfläche der zweiten Aussparung aufweist und der erste Vorsprung eine Stirnfläche des ersten Vorsprungs aufweist, wobei die Stirnfläche der zweiten Aussparung diese in einer Axialrichtung bezüglich des Dichtungsrings begrenzt, die Stirnfläche des ersten Vorsprungs diesen in der Axialrichtung begrenzt, wobei in dem Kopplungszustand die Stirnfläche der zweiten Aussparung und die Stirnfläche des ersten Vorsprungs einander zugewandt angeordnet sind und einen zweiten Dichtspalt begrenzen. Durch das Vorsehen des ersten Dichtspalts und/oder des zweiten Dichtspalts kann der Strömungswiderstand weiter erhöht werden und somit der Wirkungsgrad der Strömungsmaschine erhöht werden.

Das erste Segment weist bevorzugt eine erste Aussparungsflanke auf, die die erste Aussparung in der Umfangrichtung begrenzt, und der zweite Vorsprung weist bevorzugt eine zweite Flanke des zweiten Vorsprungs auf, wobei in dem Kopplungszustand die erste Aussparungsflanke und die zweite Flanke des zweiten Vorsprungs eingerichtet sind, bei einem zweiten Verlagern des ersten Segments hin zu dem zweiten Segment aneinander anzustoßen und somit das zweite Verlagern zu begrenzen.

Es ist besonders bevorzugt, dass die zweite Flanke des zweiten Vorsprungs und das das zweite Längsende zusammenfallen.

Das zweite Segment weist bevorzugt eine Aussparungsradialbegrenzung auf, die die zweite Aussparung in einer Radialrichtung bezüglich des Dichtungsrings begrenzt, wobei in dem Kopplungszustand der erste Vorsprung und die Aussparungsradialbegrenzung einen dritten Dichtspalt begrenzen. Durch das Vorsehen des dritten Dichtspalts kann der Strömungswiderstand noch weiter erhöht werden.

Es ist bevorzugt, dass das zweite Segment ein in Richtung von dem verbliebenen zweiten Segment vorstehenden Umfangsvorsprung aufweist und das erste Segment eine Aufnahme aufweist, in der in dem Kopplungszustand der Umfangsvorsprung angeordnet ist.

Der Dichtungsring hat bevorzugt ein T-förmiges Profil.

Es ist bevorzugt, dass alle Segmente baugleich ausgeführt sind.

Es ist bevorzugt, dass alle Segmente jeweils in dem Bereich des ersten Längsendes die erste Aussparung und den ersten Vorsprung mit der die erste Aussparung begrenzenden ersten Flanke des ersten Vorsprungs aufweisen und in dem Bereich des zweiten Längsendes die zweite Aussparung und den zweiten Vorsprung mit der die zweite Aussparung begrenzenden ersten Flanke des zweiten Vorsprungs aufweisen, wobei der Dichtungsring einen Zusammenbauzustand hat, in dem alle Paare von denjenigen Segmenten, die in dem Dichtungsrichtung benachbart angeordnet sind, in dem Kopplungszustand angeordnet sind.

Die erfindungsgemäße Strömungsmaschine weist den Dichtungsring auf. Der Dichtungsring ist bevorzugt eingerichtet, eine Kühlluft und/oder eine Sperrluft in der Strömungsmaschine abzudichten. Bei der Strömungsmaschine kann es sich beispielsweise um eine Dampfturbine oder eine Gasturbine handeln. Der Dichtungsring kann einem Verdichterabschnitt der Gasturbine und/oder einem Turbinenabschnitt der Gasturbine angeordnet sein.

Im Folgenden wird anhand der beigefügten schematischen Zeichnungen die Erfindung näher erläutert. Es zeigen
Figur 1 eine perspektivische Ansicht einer ersten Ausführungsform des Dichtungsrings,
Figur 2 eine perspektivische Ansicht eines ersten Segments der ersten Ausführungsform,
Figur 3 eine perspektivische Ansicht einer zweiten Ausführungsform des Dichtungsrings,
Figur 4 eine perspektivische Ansicht eines ersten Segments der zweiten Ausführungsform,
Figur 5 eine perspektivische Ansicht eines zweiten Segments der zweiten Ausführungsform und
Figur 6 die Dichtungsanordnung mit dem Dichtungsring im Längsschnitt mit Rotorscheibe, Abdeckring und Laufschaufel.

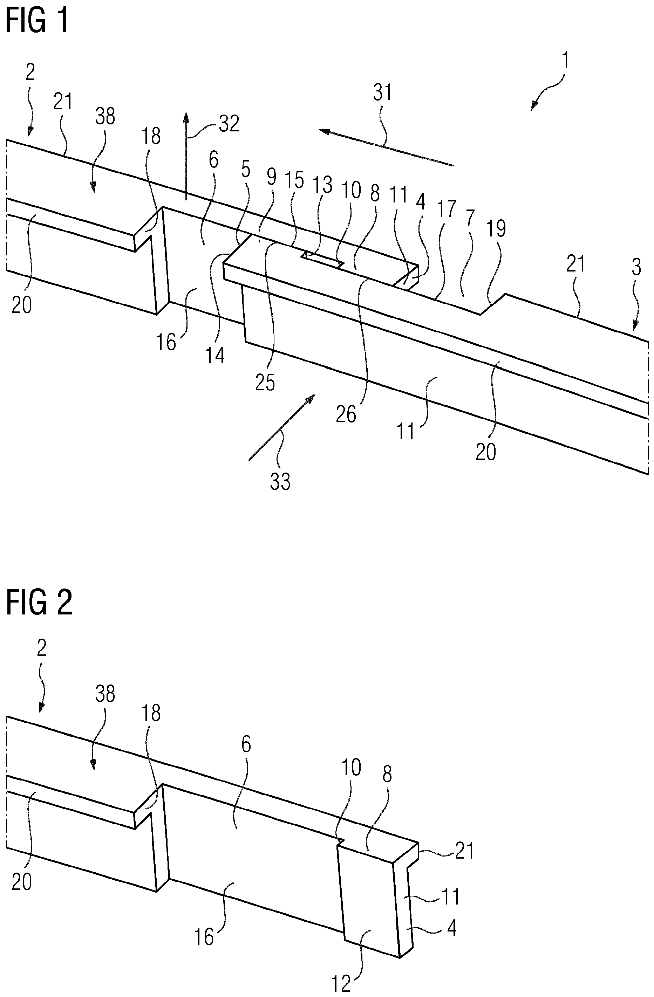

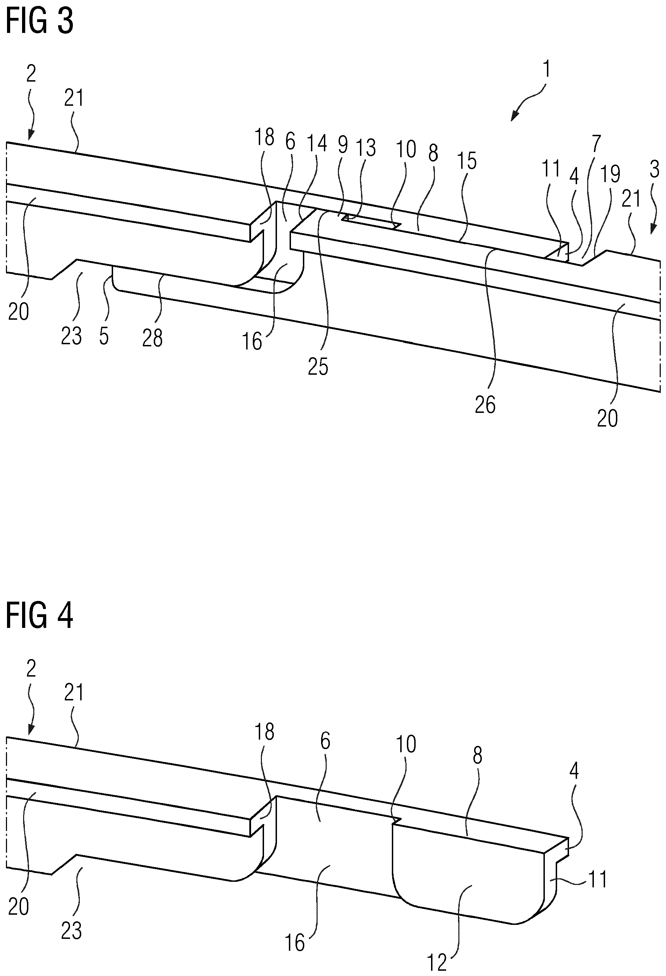

Wie es aus Figuren 1 bis 6 ersichtlich ist, weist ein Dichtungsring 1 für eine Strömungsmaschine mindestens ein erstes Segment 2 und ein zweites Segment 3 auf. Das erste Segment 2 und das zweite Segment 3 weisen jeweils ein erstes Längsende 4 bezüglich einer Umfangsrichtung 31 (siehe Figur 1) des Dichtungsrings 1 und ein zweites Längsende 5 bezüglich der Umfangsrichtung 31 auf. Das erste Segment 2 weist in einem Bereich des ersten Längsendes 4 eine erste Aussparung 6 und einen ersten Vorsprung 8 mit einer die erste Aussparung 6 in der Umfangsrichtung 31 begrenzenden ersten Flanke 10 des ersten Vorsprungs 8 auf. Das zweite Segment 3 weist in einem Bereich des zweiten Längsendes 5 eine zweite Aussparung 7 und einen zweiten Vorsprung 9 mit einer die zweite Aussparung 7 in der Umfangsrichtung 31 begrenzenden ersten Flanke 13 des zweiten Vorsprungs 8 auf. Das erste Segment 2 und das zweite Segment 3 weisen einen Kopplungszustand auf, der in Figuren 1 und 3 dargestellt ist und in dem das erste Segment 2 und das zweite Segment 3 in der Umfangsrichtung 31 relativ zueinander verlagerbar sind sowie der erste Vorsprung 8 in der zweiten Aussparung 7 angeordnet ist, der zweite Vorsprung 9 in der ersten Aussparung 6 angeordnet ist sowie die erste Flanke 10 des ersten Vorsprung 8 und die erste Flanke 13 des zweiten Vorsprungs 9 eingerichtet sind, bei einem ersten Verlagern des ersten Segments 2 weg von dem zweiten Segment 3 aneinander anzustoßen und somit das erste Verlagern zu begrenzen.

Der Bereich des ersten Längsendes 4 kann sich beispielsweise ausgehend von dem ersten Längsende 4 in der Umfangsrichtung 31 bis zu 50 %, insbesondere 25 % oder 15 %, einer Gesamtlänge des jeweiligen Segments 2, 3 in der Umfangsrichtung 31 hin zu dem zweiten Längsende 5 des jeweiligen Segments 2, 3 erstrecken. Die erste Aussparung 6 kann beispielsweise vollständig in dem Bereich des ersten Längsendes 4 angeordnet sein. Der Bereich des zweiten Längsendes 5 kann sich beispielsweise ausgehend von dem zweiten Längsende 5 in der Umfangsrichtung 31 bis zu 50 %, insbesondere 25 % oder 15 %, einer Gesamtlänge des jeweiligen Segments 2, 3 in der Umfangsrichtung 31 hin zu dem ersten Längsende 5 des jeweiligen Segments 2, 3 erstrecken. Die zweite Aussparung 7 kann beispielsweise vollständig in dem Bereich des zweiten Längsendes 5 angeordnet sein.

Alle die Segmente 2, 3 können jeweils in dem Bereich des ersten Längsendes 4 die erste Aussparung 6 und den ersten Vorsprung 8 mit der die erste Aussparung 6 begrenzenden ersten Flanke 10 des ersten Vorsprungs 8 aufweisen und können in dem Bereich des zweiten Längsendes 5 die zweite Aussparung 7 und den zweiten Vorsprung 9 mit der die zweite Aussparung 7 begrenzenden ersten Flanke 13 des zweiten Vorsprungs 8 aufweisen. Dabei kann der Dichtungsring 1 einen Zusammenbauzustand haben, in dem alle Paare von denjenigen Segmenten 2, 3, die in dem Dichtungsrichtung 1 benachbart angeordnet sind, in dem Kopplungszustand angeordnet sind. Dabei können alle die Segmente 2, 3 baugleich ausgeführt sein. Die in Figur 1 einzeichneten Umfangsrichtung 31 bezüglich des Dichtungsrings 1, Radialrichtung 32 bezüglich des Dichtungsrings 1 und Axialrichtung 33 bezüglich des Dichtungsrings 1 können sich dabei auf den Dichtungsring 1 in dessen Zusammenbauzustand beziehen.

Figuren 1 und 3 zeigen, dass die erste Aussparung 6 in der Umfangsrichtung 31 länger als der zweite Vorsprung 9 in der Umfangsrichtung 31 sein kann und die zweite Aussparung 7 in der Umfangsrichtung 31 länger als der erste Vorsprung 8 in der Umfangsrichtung 31 sein kann. Insbesondere kann eine minimale Erstreckung der ersten Aussparung 6 in der Umfangsrichtung 31 länger als eine maximale Erstreckung des zweiten Vorsprungs 9 in der Umfangsrichtung sein und insbesondere kann eine minimale Erstreckung der zweiten Aussparung 7 in der Umfangsrichtung 31 länger als eine maximale Erstreckung des ersten Vorsprungs 8 in der Umfangsrichtung 31 sein.

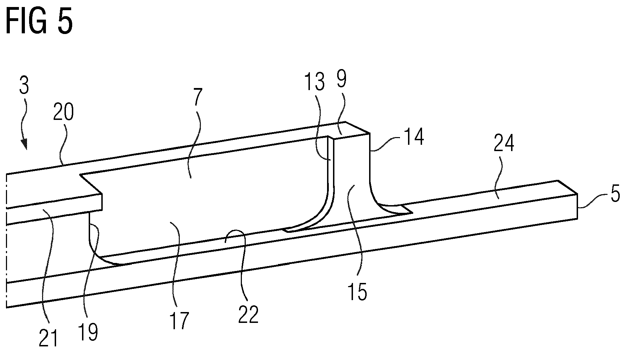

Wie es aus Figuren 1 und 3 ersichtlich ist, kann die erste Aussparung 6 eine Stirnfläche 16 (siehe Figuren 2 und 4) der ersten Aussparung 6 aufweisen und der zweite Vorsprung 9 kann eine Stirnfläche 15 (siehe Figur 5) des zweiten Vorsprungs 9 aufweisen, wobei die Stirnfläche 16 der ersten Aussparung 6 diese in der Axialrichtung 33 bezüglich des Dichtungsrings 1 begrenzt, die Stirnfläche 15 des zweiten Vorsprungs 9 diesen in der Axialrichtung 33 begrenzt, wobei in dem Kopplungszustand die Stirnfläche 16 der ersten Aussparung 6 und die Stirnfläche 15 des zweiten Vorsprungs 9 einander zugewandt angeordnet sind und einen ersten Dichtspalt 25 begrenzen. Zudem kann die zweite Aussparung 7 eine Stirnfläche 17 (siehe Figur 5) der zweiten Aussparung 7 aufweisen und der erste Vorsprung 8 kann eine Stirnfläche 12 (siehe Figuren 2 und4) des ersten Vorsprungs 8 aufweisen, wobei die Stirnfläche 17 der zweiten Aussparung 7 diese in der Axialrichtung 33 bezüglich des Dichtungsrings 1 begrenzt, die Stirnfläche 12 des ersten Vorsprungs 8 diesen in der Axialrichtung 33 begrenzt, wobei in dem Kopplungszustand die Stirnfläche 17 der zweiten Aussparung 7 und die Stirnfläche 12 des ersten Vorsprungs 8 einander zugewandt angeordnet sind und einen zweiten Dichtspalt 26 begrenzen.

Wie es aus Figuren 1 bis 5 ersichtlich ist, kann der Dichtungsring 1 ein T-förmiges Profil haben. Dazu können das erste Segment 2 und das zweite Segment 3 einen ersten Überstand 20 aufweisen, der in der Radialrichtung 32 außen (siehe die Figuren) oder in der Radialrichtung 32 innen an dem ersten Segment 2 und dem zweiten Segment 3 angeordnet ist und von dem verbliebenen Segment 2, 3 in der Axialrichtung 33 vorsteht. Zudem können das erste Segment 2 und das zweite Segment 3 einen zweiten Überstand 21 aufweisen, der in der Radialrichtung 32 außen (siehe die Figuren) oder in der Radialrichtung 32 innen an dem ersten Segment 2 und dem zweiten Segment 3 angeordnet ist und von dem verbliebenen Segment 2, 3 in der Axialrichtung 33 und an einer dem ersten Überstand 20 abgewandten Seite vorsteht.

Figuren 1 bis 5 zeigen, dass das erste Segment 2 eine erste Aussparungsflanke 18 aufweisen kann, die die erste Aussparung 6 in der Umfangrichtung 31 begrenzt, und der zweite Vorsprung 9 eine zweite Flanke 14 des zweiten Vorsprungs 9 aufweisen kann, wobei in dem Kopplungszustand die erste Aussparungsflanke 18 und die zweite Flanke 14 des zweiten Vorsprungs 9 eingerichtet sind, bei einem zweiten Verlagern des ersten Segments 2 hin zu dem zweiten Segment 3 aneinander anzustoßen und somit das zweite Verlagern zu begrenzen. Die erste Aussparungsflanke 18 kann der ersten Flanke 10 des ersten Vorsprungs 8 zugewandt angeordnet sein. Zudem kann das zweite Segment 3 eine zweite Aussparungsflanke 19 aufweisen, die die zweite Aussparung 7 in der Umfangrichtung 31 begrenzt und der ersten Flanke 13 des zweiten Vorsprungs 9 zugewandt angeordnet ist.

Figuren 1 und 2 zeigen, dass gemäß einer ersten Ausführungsform des Dichtungsrings 1 die zweite Flanke 14 des zweiten Vorsprungs 9 und das das zweite Längsende 5 zusammenfallen können.

Figur 5 zeigt, dass gemäß einer zweiten Ausführungsform des Dichtungsrings 1 das zweite Segment 2 eine Aussparungsradialbegrenzung 22 aufweisen kann, die die zweite Aussparung 7 in einer Radialrichtung 32 bezüglich des Dichtungsrings 1 begrenzt, wobei in dem Kopplungszustand der erste Vorsprung 8 und die Aussparungsradialbegrenzung 22 einen dritten Dichtspalt begrenzen. Zudem kann gemäß der zweiten Ausführungsform (siehe Figuren 3 bis 5) das zweite Segment 3 ein in Richtung von dem verbliebenen zweiten Segment 4 vorstehenden Umfangsvorsprung 24 aufweisen und das erste Segment 2 kann eine Aufnahme 23 aufweisen, in der in dem Kopplungszustand der Umfangsvorsprung 24 angeordnet ist. Außerdem ist denkbar, dass der Umfangsvorsprung 24 in der Umfangsrichtung 31 fluchtend mit der Aussparungsradialbegrenzung 22 angeordnet ist, vergleiche Figur 5.

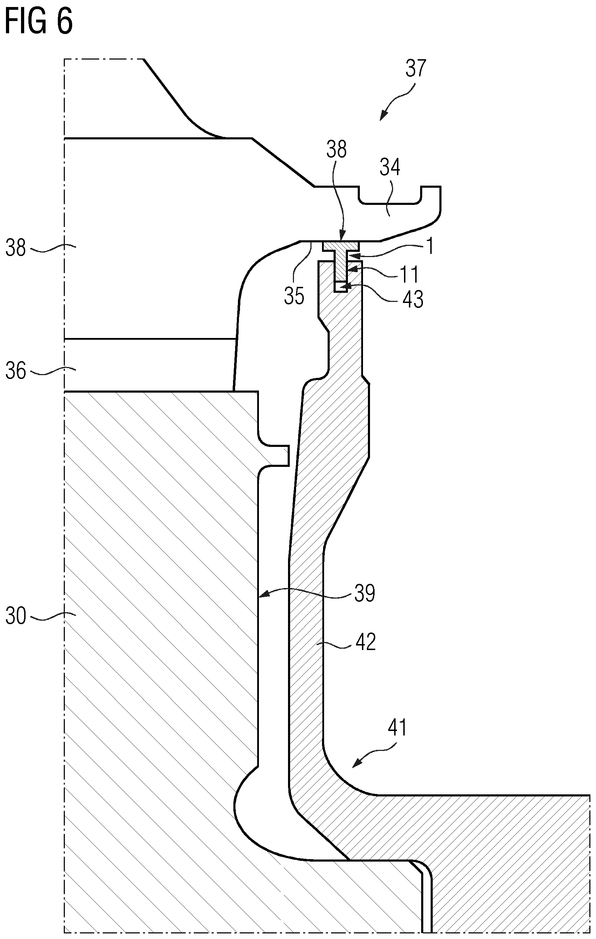

In der Figur 6 wird eine beispielhafte Ausführungsform für einen erfindungsgemäßen Rotor im Längsschnitt skizziert. Dargestellt ist hier nur ausschnittsweise der Bereich einer Dichtungsanordnung, wobei dem Fachmann die Gestaltung des Rotors wohl bekannt ist und keiner weiteren Erläuterung bedarf.

Zu erkennen ist abschnittsweise die Rotorscheibe 30, welche 30 entlang ihres Umfangs verteilt eine Mehrzahl von Schaufelhaltenuten aufweist. In den Schaufelhaltenuten ist jeweils eine Laufschaufel 37 mit einem Schaufelfuß 36 angeordnet. Die sodann strahlenartig angeordneten Laufschaufeln bilden einen Schaufelkranz. An den Schaufelfuß 36 schließt sich, wie üblich, die Schaufelplattform 38 an, welche sich in Umfangsrichtung und axial erstreckt. Hierbei überragt die Schaufelplattform 38 mit einem Plattformüberstand 34 eine Stirnseite 39 der Rotorscheibe 30 und weist hierbei eine Unterseite 35 auf.

Stirnseitig benachbart zur Rotorscheibe 30 befindet sich ein Rotorbauteil 41, welches 41 gemäß diesem Ausführungsbeispiels integral den Abdeckring 42 bildet, welcher 42 sich im Wesentlichen in Umfangsrichtung und radial erstreckt. Abgesehen von thermischen und/oder fliehkraftbedingten Dehnungen treten zwischen der Rotorscheibe 30 und dem Rotorbauteil keine Relativverschiebungen oder gar Relativbewegungen auf. Sie sind - im Bezug zueinander - als statische Bauteile anzusehen, gleichwohl der Rotor in bekannter Manier insgesamt drehbar gelagert ist. Alternativ zur gezeigten, integralen Ausgestaltung kann der Abdeckring auch modular ausgestaltet sein und somit eine Vielzahl von entlang des Umfangs verteilten Dichtblechen umfassen, die an der Rotorscheibe 30 stirnseitig gehalten sind.

Der Abdeckring 42 weist eine sich radial auswärts öffnende, in Umfangsrichtung erstreckende Aufnahmenut 43 auf. In dieser 43 ist der oben beschriebene, segmentierte Dichtungsring 1 gelagert. Zu erkennen ist das im Wesentlichen T-förmige Profil des Dichtungsringes 1. Der Dichtungsring 1 umfasst einen Lagerungsabschnitt 11 (Figur 2), angeordnet in der Aufnahmenut 43, sowie auf der radial auswärtsweisenden Seite einen Anlageabschnitt 38 auf. Der Anlageabschnitt 38 kommt zumindest bei Rotation des Rotors an der Unterseite 15 des Plattformüberstands 14 zur Anlage und dichtet somit den bauartbedingten Radialspalt zwischen Unterseite 35 und Abdeckring 42, um eine Strömung von Kühlluft oder Sperrluft durch den Radialspalt zu reduzieren bzw. gar zu vermeiden.

## Patentansprüche

1. Rotor für eine Strömungsmaschine,
mit einer Rotorscheibe (30), die umfangsseitig eine Vielzahl von in einem Kranz angeordneten Laufschaufeln (37) aufweist, wobei die Laufschaufeln (37) eine Schaufelplattform (38) mit einem Plattformüberstand (34) umfassen, deren (34) Unterseite (35) einer Stirnseite (39) der Rotorscheibe (30) zugewandt ist,
wobei stirnseitig der Rotorscheibe (30) und radial innerhalb der Unterseite (35) ein Abdeckring (42) mit einer sich radial auswärts öffnenden, in Umfangsrichtung erstreckende Aufnahmenut (43) angeordnet ist, in welcher (43) ein Dichtungsring (1) zur Dichtung eines Radialspalts zwischen Unterseite (35) und Abdeckring (42) angeordnet ist,
wobei der Dichtungsring mindestens ein erstes Segment (2) und ein zweites Segment (3) umfasst, die jeweils ein erstes Längsende (4) bezüglich einer Umfangsrichtung (31) des Dichtungsrings (1) und ein zweites Längsende (5) bezüglich der Umfangsrichtung (31) aufweisen,
**dadurch gekennzeichnet, dass** das erste Segment (2) in einem Bereich des ersten Längsendes (4) eine erste Aussparung (6) und einen ersten Vorsprung (8) mit einer die erste Aussparung (6) in der Umfangsrichtung (31) begrenzenden ersten Flanke (10) des ersten Vorsprungs (8) aufweist und das zweite Segment (3) in einem Bereich des zweiten Längsendes (5) eine zweite Aussparung (7) und einen zweiten Vorsprung (9) mit einer die zweite Aussparung (7) in der Umfangsrichtung (31) begrenzenden ersten Flanke (13) des zweiten Vorsprungs (8) aufweist, wobei das erste Segment (2) und das zweite Segment (3) einen Kopplungszustand aufweisen, in dem das erste Segment (2) und das zweite Segment (3) in der Umfangsrichtung (31) relativ zueinander verlagerbar sind sowie der erste Vorsprung (8) in der zweiten Aussparung (7) angeordnet ist, der zweite Vorsprung (9) in der ersten Aussparung (6) angeordnet ist sowie die erste Flanke (10) des ersten Vorsprungs (8) und die erste Flanke (13) des zweiten Vorsprungs (9) eingerichtet sind, bei einem ersten Verlagern des ersten Segments (2) weg von dem zweiten Segment (3) aneinander anzustoßen und somit das erste Verlagern zu begrenzen.

2. Rotor gemäß Anspruch 1,
wobei die erste Aussparung (6) in der Umfangsrichtung (31) länger als der zweite Vorsprung (9) in der Umfangsrichtung (31) ist und die zweite Aussparung (7) in der Umfangsrichtung (31) länger als der erste Vorsprung (8) in der Umfangsrichtung (31) ist.

3. Rotor gemäß Anspruch 1 oder 2,
wobei die erste Aussparung (6) eine Stirnfläche (16) der ersten Aussparung (6) aufweist und der zweite Vorsprung (9) eine Stirnfläche (15) des zweiten Vorsprungs (9) aufweist, wobei die Stirnfläche (16) der ersten Aussparung (6) diese in einer Axialrichtung (33) bezüglich des Dichtungsrings (1) begrenzt, die Stirnfläche (15) des zweiten Vorsprungs (9) diesen in der Axialrichtung (33) begrenzt, wobei in dem Kopplungszustand die Stirnfläche (16) der ersten Aussparung (6) und die Stirnfläche (15) des zweiten Vorsprungs (9) einander zugewandt angeordnet sind und einen ersten Dichtspalt (25) begrenzen.

4. Rotor gemäß einem der Ansprüche 1 bis 3,
wobei die zweite Aussparung (7) eine Stirnfläche (17) der zweiten Aussparung (7) aufweist und der erste Vorsprung (8) eine Stirnfläche (12) des ersten Vorsprungs (8) aufweist, wobei die Stirnfläche (17) der zweiten Aussparung (7) diese in einer Axialrichtung (33) bezüglich des Dichtungsrings (1) begrenzt, die Stirnfläche (12) des ersten Vorsprungs (8) diesen in der Axialrichtung (33) begrenzt, wobei in dem Kopplungszustand die Stirnfläche (17) der zweiten Aussparung (7) und die Stirnfläche (12) des ersten Vorsprungs (8) einander zugewandt angeordnet sind und einen zweiten Dichtspalt (26) begrenzen.

5. Rotor gemäß einem der Ansprüche 1 bis 4,
wobei das erste Segment (2) eine erste Aussparungsflanke (18) aufweist, die die erste Aussparung (6) in der Umfangrichtung (31) begrenzt, und der zweite Vorsprung (9) eine zweite Flanke (14) des zweiten Vorsprungs (9) aufweist, wobei in dem Kopplungszustand die erste Aussparungsflanke (18) und die zweite Flanke (14) des zweiten Vorsprungs (9) eingerichtet sind, bei einem zweiten Verlagern des ersten Segments (2) hin zu dem zweiten Segment (3) aneinander anzustoßen und somit das zweite Verlagern zu begrenzen.

6. Rotor gemäß Anspruch 5,
wobei die zweite Flanke (14) des zweiten Vorsprungs (9) und dass das zweite Längsende (5) zusammenfallen.

7. Rotor gemäß einem der Ansprüche 1 bis 6,
wobei das zweite Segment (2) eine Aussparungsradialbegrenzung (22) aufweist, die die zweite Aussparung (7) in einer Radialrichtung (32) bezüglich des Dichtungsrings (1) begrenzt, wobei in dem Kopplungszustand der erste Vorsprung (8) und die Aussparungsradialbegrenzung (22) einen dritten Dichtspalt begrenzen.

8. Rotor gemäß einem der Ansprüche 1 bis 5 und 7,
wobei das zweite Segment (3) ein in Richtung von dem verbliebenen zweiten Segment (4) vorstehenden Umfangsvorsprung (24) aufweist und das erste Segment (2) eine Aufnahme (23) aufweist, in der in dem Kopplungszustand der Umfangsvorsprung (24) angeordnet ist.

9. Rotor gemäß einem der Ansprüche 1 bis 8,
wobei der Dichtungsring (1) ein T-förmiges Profil hat.

10. Rotor gemäß einem der Ansprüche 1 bis 9,
wobei alle die Segmente (2, 3) baugleich ausgeführt sind.

11. Rotor gemäß einem der Ansprüche 1 bis 10,
wobei alle die Segmente (2, 3) jeweils in dem Bereich des ersten Längsendes (4) die erste Aussparung (6) und den ersten Vorsprung (8) mit der die erste Aussparung (6) begrenzenden ersten Flanke (10) des ersten Vorsprungs (8) aufweisen und in dem Bereich des zweiten Längsendes (5) die zweite Aussparung (7) und den zweiten Vorsprung (9) mit der die zweite Aussparung (7) begrenzenden ersten Flanke (13) des zweiten Vorsprungs (8) aufweisen, wobei der Dichtungsring (1) einen Zusammenbauzustand hat, in dem alle Paare von denjenigen Segmenten (2, 3), die in dem Dichtungsrichtung (1) benachbart angeordnet sind, in dem Kopplungszustand angeordnet sind.

12. Strömungsmaschine mit einem Rotor gemäß einem der Ansprüche 1 bis 11.

13. Strömungsmaschine gemäß Anspruch 12,
wobei der Dichtungsring (1) eingerichtet ist, eine Kühlluft und/oder eine Sperrluft in der Strömungsmaschine abzudichten.

## Claims

1. A rotor for a turbomachine,
with a rotor disc (30), which has a plurality of rotor blades (37) arranged in a circle on the circumference, wherein the rotor blades (37) comprise a blade platform (38) with a platform projection (34), whose (34) underside (35) faces an end face (39) of the rotor disc (30),
wherein a cover ring (42) having a receiving groove (43) that opens radially outward and extends in a circumferential direction is arranged on the end face of the rotor disc (30) and radially inside the underside (35), in which (43) a sealing ring (1) is arranged for sealing a radial gap between the underside (35) and the cover ring (42),
wherein the sealing ring comprises at least one first segment (2) and one second segment (3), each having a first longitudinal end (4) with respect to a circumferential direction (31) of the sealing ring (1) and a second longitudinal end (5) with respect to the circumferential direction (31),
**characterized in that** the first segment (2) in a region of the first longitudinal end (4) has a first recess (6) and a first protrusion (8) with a first flank (10) of the first protrusion (8) delimiting the first recess (6) in the circumferential direction (31), and the second segment (3) in a region of the second longitudinal end (5) has a second recess (7) and a second protrusion (9) with a first flank (13) of the second protrusion (8) delimiting the second recess (7) in the circumferential direction (31), wherein the first segment (2) and the second segment (3) have a coupling state in which the first segment (2) and the second segment (3) are displaceable relative to one another in the circumferential direction (31), and the first protrusion (8) is arranged in the second recess (7), the second protrusion (9) is arranged in the first recess (6), and the first flank (10) of the first protrusion (8) and the first flank (13) of the second protrusion (9) are configured to abut against one another during a first displacing of the first segment (2) away from the second segment (3), and thus to delimit the first displacing.

2. The rotor according to claim 1,
wherein the first recess (6) is longer in the circumferential direction (31) than the second protrusion (9) in the circumferential direction (31) and the second recess (7) is longer in the circumferential direction (31) than the first recess (8) in the circumferential direction (31).

3. The rotor according to claim 1 or 2,
wherein the first recess (6) has an end face (16) of the first recess (6) and the second protrusion (9) has an end face (15) of the second protrusion (9), wherein the end face (16) of the first recess (6) delimits it in an axial direction (33) with respect to the sealing ring (1), the end face (15) of the second protrusion (9) delimits it in the axial direction (33), wherein in the coupling state the end face (16) of the first recess (6) and the end face (15) of the second protrusion (9) are arranged facing each other and delimit a first sealing gap (25).

4. The rotor according to one of claims 1 to 3,
wherein the second recess (7) has an end face (17) of the second recess (7) and the first protrusion (8) has an end face (12) of the first protrusion (8), wherein the end face (17) of the second recess (7) delimits it in an axial direction (33) with respect to the sealing ring (1), the end face (12) of the first protrusion (8) delimits it in the axial direction (33), wherein in the coupling state the end face (17) of the second recess (7) and the end face (12) of the first protrusion (8) are arranged facing each other and delimit a second sealing gap (26).

5. The rotor according to one of claims 1 to 4,
wherein the first segment (2) has a first recess flank (18) delimiting the first recess (6) in the circumferential direction (31), and the second protrusion (9) has a second flank (14) of the second protrusion (9), wherein in the coupling state the first recess flank (18) and the second flank (14) of the second protrusion (9) are configured to abut against one another during a second displacing of the first segment (2) towards the second segment (3), and thus to delimit the second displacing.

6. The rotor according to claim 5,
wherein the second flank (14) of the second protrusion (9) and that the second longitudinal end (5) coincide.

7. The rotor according to one of claims 1 to 6,
wherein the second segment (2) has a recess radial limit (22) that delimits the second recess (7) in a radial direction (32) with respect to the sealing ring (1), wherein in the coupling state the first protrusion (8) and the recess radial limit (22) delimit a third sealing gap.

8. The rotor according to one of claims 1 to 5 and 7,
wherein the second segment (3) has a circumferential protrusion (24) protruding in the direction of the remaining second segment (4), and the first segment (2) has a receptacle (23) in which the circumferential protrusion (24) is arranged in the coupling state.

9. The rotor according to one of claims 1 to 8,
wherein the sealing ring (1) has a T-shaped profile.

10. The rotor according to one of claims 1 to 9,
wherein all segments (2, 3) are of an identical design.

11. The rotor according to one of claims 1 to 10,
wherein all segments (2, 3) each have, in the region of the first longitudinal end (4), the first recess (6) and the first protrusion (8) with the first flank (10) of the first protrusion (8) delimiting the first recess (6), and have, in the region of the second longitudinal end (5), the second recess (7) and the second protrusion (9) with the first flank (13) of the second protrusion (8) delimiting the second recess (7), wherein the sealing ring (1) has an assembly state in which all pairs of those segments (2, 3) that are arranged adjacent in the sealing direction (1) are arranged in the coupling state.

12. A turbomachine with a rotor according to one of claims 1 to 11.

13. The turbomachine according to claim 12,
wherein the sealing ring (1) is configured to seal a cooling air and/or a sealing air in the turbomachine.

## Revendications

1. Rotor pour turbomachine,
comprenant un disque de rotor (30) présentant côté circonférentiel une pluralité d'aubes mobiles (37) agencées dans une couronne, les aubes mobiles (37) comprenant une plateforme d'aube (38) avec un porte-à-faux de plateforme (34), dont (34) la face inférieure (35) est orientée vers une face avant (39) du disque de rotor (30),
dans lequel un anneau de recouvrement (42) avec une rainure de réception (43) s'ouvrant radialement vers l'extérieur et s'étendant dans la direction circonférentielle est agencé sur la face avant du disque de rotor (30) et radialement à l'intérieur de la face inférieure (35), dans laquelle (43) un anneau d'étanchéité (1) est agencé pour l'étanchéité d'un jeu radial entre la face inférieure (35) et l'anneau de recouvrement (42), dans lequel l'anneau d'étanchéité comprend au moins un premier segment (2) et un deuxième segment (3), qui présentent chacun une première extrémité longitudinale (4) par rapport à une direction circonférentielle (31) de l'anneau d'étanchéité (1) et une deuxième extrémité longitudinale (5) par rapport à la direction circonférentielle (31),
**caractérisé en ce que** le premier segment (2) présente une première découpe (6) et une première saillie (8) avec un premier flanc (10) de la première saillie (8) délimitant la première découpe (6) dans la direction circonférentielle (31) dans une zone de la première extrémité longitudinale (4), et le deuxième segment (3) présente une deuxième découpe (7) et une deuxième saillie (9) avec un premier flanc (13) de la deuxième saillie (8) délimitant la deuxième découpe (7) dans la direction circonférentielle (31) dans une zone de la deuxième extrémité longitudinale (5), le premier segment (2) et le deuxième segment (3) présentant un état d'accouplement dans lequel le premier segment (2) et le deuxième segment (3) peuvent être déplacés l'un par rapport à l'autre dans la direction circonférentielle (31), ainsi que la première saillie (8) est agencée dans la deuxième découpe (7), la deuxième saillie (9) est agencée dans la première découpe (6), ainsi que le premier flanc (10) de la première saillie (8) et le premier flanc (13) de la deuxième saillie (9) sont configurés pour venir en butée l'un contre l'autre lors d'un premier déplacement du premier segment (2) à l'écart du deuxième segment (3) et ainsi limiter le premier déplacement.

2. Rotor selon la revendication 1,
dans lequel la première découpe (6) dans la direction circonférentielle (31) est plus longue que la deuxième saillie (9) dans la direction circonférentielle (31) et la deuxième découpe (7) dans la direction circonférentielle (31) est plus longue que la première saillie (8) dans la direction circonférentielle (31).

3. Rotor selon la revendication 1 ou 2,
dans lequel la première découpe (6) présente une face frontale (16) de la première découpe (6) et la deuxième saillie (9) présente une face frontale (15) de la deuxième saillie (9), la face frontale (16) de la première découpe (6) la délimitant dans une direction axiale (33) par rapport à l'anneau d'étanchéité (1), la face frontale (15) de la deuxième saillie (9) la délimitant dans la direction axiale (33), dans lequel, dans l'état d'accouplement, la face frontale (16) de la première découpe (6) et la face frontale (15) de la deuxième saillie (9) sont agencées orientées l'une vers l'autre et délimitent un premier jeu d'étanchéité (25).

4. Rotor selon l'une des revendications 1 à 3,
dans lequel la deuxième découpe (7) présente une face frontale (17) de la deuxième découpe (7) et la première saillie (8) présente une face frontale (12) de la première saillie (8), la face frontale (17) de la deuxième découpe (7) la délimitant dans une direction axiale (33) par rapport à l'anneau d'étanchéité (1), la face frontale (12) de la première saillie (8) la délimitant dans la direction axiale (33), dans lequel, dans l'état d'accouplement, la face frontale (17) de la deuxième découpe (7) et la face frontale (12) de la première saillie (8) sont agencées orientées l'une vers l'autre et délimitent un deuxième jeu d'étanchéité (26).

5. Rotor selon l'une quelconque des revendications 1 à 4,
dans lequel le premier segment (2) présente un flanc de première découpe (18), qui délimite la première découpe (6) dans la direction circonférentielle (31), et la deuxième saillie (9) présente un deuxième flanc (14) de la deuxième saillie (9), dans lequel, dans l'état d'accouplement, le flanc de première découpe (18) et le deuxième flanc (14) de la deuxième saillie (9) sont configurés pour venir en butée l'un contre l'autre lors d'un deuxième déplacement du premier segment (2) vers le deuxième segment (3) et ainsi limiter le deuxième déplacement.

6. Rotor selon la revendication 5,
dans lequel le deuxième flanc (14) de la deuxième saillie (9) et la deuxième extrémité longitudinale (5) coïncident.

7. Rotor selon l'une quelconque des revendications 1 à 6,
dans lequel le deuxième segment (2) présente une limitation radiale de découpe (22), qui délimite la deuxième découpe (7) dans une direction radiale (32) par rapport à l'anneau d'étanchéité (1), dans lequel, dans l'état d'accouplement, la première saillie (8) et la limitation radiale de découpe (22) délimitent un troisième jeu d'étanchéité.

8. Rotor selon l'une des revendications 1 à 5 et 7,
dans lequel le deuxième segment (3) présente une saillie circonférentielle (24) faisant saillie en direction du deuxième segment restant (4) et le premier segment (2) présente un logement (23), dans lequel la saillie circonférentielle (24) est agencée dans l'état d'accouplement.

9. Rotor selon l'une quelconque des revendications 1 à 8,
dans lequel l'anneau d'étanchéité (1) a un profil en forme de T.

10. Rotor selon l'une quelconque des revendications 1 à 9, dans lequel tous les segments (2, 3) sont réalisés de manière identique.

11. Rotor selon l'une quelconque des revendications 1 à 10,
dans lequel tous les segments (2, 3) présentent respectivement dans la zone de la première extrémité longitudinale (4) la première découpe (6) et la première saillie (8) avec le premier flanc (10) de la première saillie (8) délimitant la première découpe (6) et dans la zone de la deuxième extrémité longitudinale (5) la deuxième découpe (7) et la deuxième saillie (9) avec le premier flanc (13) de la deuxième saillie (8) délimitant la deuxième découpe (7), dans lequel l'anneau d'étanchéité (1) présente un état d'assemblage dans lequel toutes les paires de ces segments (2, 3), qui sont agencés de manière adjacente dans la direction d'étanchéité (1), sont agencées dans l'état d'accouplement.

12. Turbomachine comprenant un rotor selon l'une quelconque des revendications 1 à 11.

13. Turbomachine selon la revendication 12,
dans laquelle l'anneau d'étanchéité (1) est configuré pour étancher un air de refroidissement et/ou un air de barrage dans la turbomachine.
